# EUROPÄISCHE PATENTSCHRIFT

(11) **EP 3 841 037 B1**
(45) Veröffentlichungstag und Bekanntmachung des Hinweises auf die Patenterteilung: **07.06.2023**
(21) Anmeldenummer: 19769384.9
(22) Anmeldetag: 21.08.2019
(51) Int. Cl.: B65G 1/08, B65G 47/88

(54) **BETÄTIGUNGSEINRICHTUNG ZUR BETÄTIGUNG EINER TRENNVORRICHTUNG FÜR EINE SCHWERKRAFTFÖRDERBAHN**
ACTUATING APPARATUS FOR ACTUATING A SEPARATING DEVICE FOR A GRAVITATIONAL CONVEYOR
SYSTÈME D'ACTIONNEMENT PERMETTANT D'ACTIONNER UN DISPOSITIF DE SÉPARATION DESTINÉ À UNE BANDE TRANSPORTEUSE À FORCE DE PESANTEUR

(30) Priorität: 21.08.2018 DE 102018120404
(43) Veröffentlichungstag der Anmeldung: 30.06.2021
(73) Patentinhaber: Euroroll GmbH, 59387 Ascheberg-Herbern (DE)
(72) Erfinder: KLEIN, Thomas, 48317 DRENSTEINFURT (DE)
(74) Vertreter: SSM Sandmair
(86) Internationale Anmeldenummer: PCT/EP2019/072385
(87) Internationale Veröffentlichungsnummer: WO 2020/039003

(56) Entgegenhaltungen:
- EP-A1- 0 968 938
- EP-A1- 1 213 242
- EP-A1- 3 263 493
- BE-A- 753 336
- DE-A1- 3 035 338
- US-A- 3 810 534

## Beschreibung

Die Erfindung betrifft eine Trennvorrichtung für eine Schwerkraftförderbahn, insbesondere Schwerkraftrollenförderbahn, mit einer Förderebene, welche durch wenigstens eine Führung zur Förderung des Förderguts vorgegeben ist. Die Trennvorrichtung dient der staudruckfreien Entnahme des Förderguts, wie z. B. Paletten, Kisten, oder dergleichen. Die Schwerkraftförderbahn umfasst üblicherweise einen Förderteil und eine Entnahmestation, die von der Trennvorrichtung von dem Förderteil getrennt ist. Die Trennvorrichtung trennt in der Entnahmestation befindliches Fördergut, welches in der Regel von dem Förderteil in die Entnahmestation gefördert wurde, von nachfolgendem Fördergut, d. h. das Fördergut in dem Förderteil. In dem Förderteil befindliches Fördergut bzw. das nachfolgende Fördergut kann an der Trennvorrichtung anstehen. D. h., dass die Trennvorrichtung das in der Entnahmestation befindliche Fördergut von nachfolgendem Fördergut trennt. Auf diese Weise wird verhindert, dass das nachfolgende Fördergut auf das in der Entnahmestation befindliche Fördergut aufläuft oder drückt, wodurch verhindert wird, dass das nachrückende Fördergut die Entnahme erschwert. Hierdurch wird erreicht, dass das zu entnehmende Fördergut staudruckfrei, beispielsweise mittels eines Hubwagens oder Gabelstaplers, aus der Entnahmestation entnommen werden kann.

Aus dem Stand der Technik sind Schwerkraftförderbahnen, insbesondere Schwerkraftrollenförderbahnen, mit einer Trennvorrichtung bekannt, welche das zu entnehmende Fördergut von dem nachfolgenden Fördergut trennt. Beispielsweise ist aus der Druckschrift DE 20 2011 005 138 U1 eine Schwerkraftförderbahn bekannt, bei der das in die Entnahmestation einlaufende Fördergut ein Betätigungsglied betätigt. Das Betätigen des Betätigungsglieds bewirkt, dass ein Trennanschlag aus einer Position unterhalb der Förderebene in eine Position oberhalb der Förderebene bewegt wird, wodurch ein Einlaufen von nachfolgendem Fördergut in die Entnahmestation verhindert wird. Das Betätigungsglied ist zungenförmig und in Bezug auf die Förderebene so geneigt, dass in die Entnahmestation einlaufendes Fördergut das Betätigungsglied von einer Position oberhalb der Förderebene um eine Schwenkachse verschwenkt. Bei der DE 20 2011 005 138 U1 wird das Betätigungsglied manuell durch eine Bedienperson zurückgesetzt, wodurch der Trennanschlag nachfolgendes Fördergut freigibt, um in die Entnahmestation einzulaufen.

Aus dem Stand der Technik sind aber auch Schwerkraftförderbahnen bekannt, bei denen das Betätigungsglied automatisch, beispielsweise durch Federkraft, aus der betätigten Position in die unbetätigte Position zurückgesetzt wird, sobald das Fördergut aus der Entnahmestation entnommen wurde.

Bekannte Betätigungsglieder haben den Nachteil, dass ein Betätigen des Betätigungsglieds nur in Förderrichtung möglich ist. In der Praxis kommt es durchaus vor, dass Fördergut aus der Entnahmestation entnommen wird, wobei nach der Entnahme festgestellt wird, dass das Fördergut hätte gar nicht aus der Entnahmestation entnommen werden sollen, sondern ein anderes einer anderen Schwerkraftförderbahn. In diesem Fall möchte die Bedienperson das Fördergut wieder in die Entnahmestation zurückstellen. Allerdings besteht bei bekannten Betätigungsgliedern die Gefahr, dass diese beim Zurückstellen des fälschlicherweise entnommenen Förderguts beschädigt oder zerstört werden, da beim Zurückstellen eine Bewegung des Förderguts entgegen der üblicherweise vorgesehenen Förderrichtung einhergeht, wobei die bekannten Betätigungsglieder nur dazu ausgelegt sind, durch Fördergut, welches sich in die Förderrichtung bewegt, betätigt zu werden, jedoch nicht durch Fördergut, welches sich entgegen der Förderrichtung bewegt.

Ferner sind Trennvorrichtungen aus der EP 2 517 982 B1 und der DE 696 01 864 T2 bekannt.

Die EP 0 968 938 A1 offenbart eine Trennvorrichtung für eine Schwerkraftförderbahn nach dem Oberbegriff des Anspruchs 1.

Der Erfindung liegt die Aufgabe zugrunde, eine Trennvorrichtung für eine Schwerkraftförderbahn bereitzustellen, bei der Fördergut zurückgestellt oder zurückgeschoben werden kann, ohne dabei die Trennvorrichtung zu beschädigen.

Die Erfindung geht von einer Trennvorrichtung für eine Schwerkraftförderbahn, insbesondere einer Schwerkraftrollenförderbahn, aus. Schwerkraftförderbahnen werden z. B. zum Transport von Fördergut verwendet. Als Fördergut kommen z. B. Kisten, Boxen oder Paletten in Frage, in oder auf denen mehrere Waren angeordnet sind. Schwerkraftförderbahnen zeichnen sich durch eine leichte Neigung gegenüber der Horizontalen (bezogen auf die Schwerkraftrichtung) aus. Durch die leichte Neigung wirkt auf das Fördergut eine Hangabtriebskraft, die es entlang einer Förderebene in Richtung zu einer Entnahmestation hin bewegt. Die Förderebene wird durch wenigstens zwei Führungen zur Führung des Fördergutes vorgegeben. Das Fördergut ist entlang oder parallel zu der Förderebene führbar. Die wenigstens zwei Führungen können durch Förderrollen oder Gleitschienen gebildet sein.

Eine Rollenförderbahn kann insbesondere ein Gestell umfassen, an dem eine Vielzahl von Förderrollen drehbar befestigt ist. Solche Förderrollen sind dem Fachmann auch unter der Bezeichnung "Tragrollen" bekannt. Das Fördergut wird auf den Förderrollen entlang bewegt oder transportiert, sodass das Fördergut an den Förderrollen abrollt abrollen, wodurch auch schwere Last mit einem relativ geringen Kraftaufwand und reibungsarm bewegbar sind. Die Rollenförderbahn kann horizontal angeordnet oder gegenüber der Horizontalen, beispielsweise mit einem Gefälle von 2 bis 10 %, bevorzugt 4 % geneigt sein, wodurch neigungsabhängig die Antriebskraft auf das zu fördernde Fördergut wirkt. Solche geneigten Rollenförderbahnen werden auch als Schwerkraftrollenförderbahnen bezeichnet.

Die Rollenförderbahn umfasst z. B. an einem Ende eine Entnahmestation, an der das Fördergut von der Rollenförderbahn entnehmbar oder abkommissionierbar ist. An der Entnahmestation kann ein Endanschlag gebildet sein, an dem das zu entnehmende Fördergut anliegt, wodurch eine weitere Bewegung des Förderguts in die Förderrichtung verhindert wird, wenn es sich in der Entnahmestation befindet. Da nachfolgendes Fördergut einen Staudruck auf das zu entnehmende Fördergut ausüben würde, d. h., dass das zu entnehmende Fördergut zwischen dem Endanschlag und dem nachfolgenden Fördergut eingeklemmt werden würde, ist eine erfindungsgemäße Trennvorrichtung vorgesehen, welche verhindert, dass das nachfolgende Fördergut einen Staudruck auf das in der Entnahmestation befindliche Fördergut ausüben kann. Die Förderrollen oder die Gleitschiene geben allgemein eine Führung zur Führung des Förderguts vor.

Die Förderrollen können jeweils um eine zu einem Gestell ortsfeste Drehachse relativ zu dem Gestell drehbar sein, wodurch zwischen dem Fördergut und den Förderrollen Rollreibung stattfindet. Die Förderrollen können auch relativ zu dem Gestell drehfest sein, so dass zwischen dem Fördergut und den Förderrollen Gleitreibung stattfindet. Die Tangente an die Umfänge der mindestens zwei Förderrollen bildet die Förderebene und entspricht im Wesentlichen der Unterseite eines ebenen, auf den mindestens zwei Förderrollen aufliegenden oder abrollenden Förder- oder Transportguts, beispielsweise einer Palette.

Wird die Führung durch eine Gleitschiene gebildet, kann die Kontaktfläche der Gleitschiene, die für den Kontakt mit dem Fördergut vorgesehen ist, die Förderebene bilden oder vorgeben. Die Gleitschiene kann reibungsarm, wie z. B. aus Kunststoff, ausgebildet sein. Geeignete Kunststoffe sind z. B. Polytetrafluorethylen, Polyacetal, etc. Die Gleitschiene kann beispielsweise mit dem Gestell verschraubt sein und/oder länglich ausgestaltet sein, um sich mit ihrer Längsrichtung in die Förderrichtung oder in Längsrichtung des Gestells erstrecken.

Die Trennvorrichtung umfasst mindestens einen Anschlag, der als Trennanschlag wirkt, weil er das nachfolgende Fördergut von dem in der Entnahmestation befindlichen Fördergut trennt. Der Anschlag ist aus einer Position, in welcher er sich oberhalb der Förderebene befindet, und einer Position, in welcher er sich unterhalb oder bündig mit der Förderebene befindet, bewegbar, insbesondere hin und her bewegbar, vorzugsweise um eine Schwenkachse schwenkbar, welche in Bezug auf die Förderebene ortsfest oder ortsfest in Bezug auf ein Gestell (gestellfest) der Förderbahn oder der Trennvorrichtung ist. Die Position, in der der mindestens eine Trennanschlag unterhalb der Förderebene ist, soll so verstanden werden, dass sie die Position miteinschließt, in der der mindestens eine Trennanschlag bündig mit der Förderebene ist. In der Position unterhalb der Förderebene kann das Fördergut an dem Anschlag vorbei bewegt werden, da der Anschlag die Bewegung des Förderguts nicht blockiert. In der Position oberhalb der Förderebene blockiert der Anschlag die Bewegung des Förderguts in die Entnahmestation. Zwischen dem in der Entnahmestation befindlichen Fördergut und dem nächstfolgenden Fördergut ist eine Lücke, in welcher der Anschlag angeordnet ist. Der Anschlag verhindert ein Nachführen des nächstfolgenden Förderguts in Richtung Entnahmestation, so dass das Fördergut in der Entnahmestation staudruckfrei von dem nächstfolgenden Fördergut ist.

Die Trennvorrichtung umfasst eine Betätigungseinrichtung, die von dem in Förderrichtung, insbesondere in die Entnahmestation, bewegten Fördergut und insbesondere von entgegen der Förderrichtung, insbesondere in die Entnahmestation, bewegten Fördergut betätigbar ist. Die Betätigungseinrichtung ist z. B. dann unbetätigt, wenn kein Fördergut auf sie einwirkt. Allgemein ist die Betätigungseinrichtung durch Einwirken von Fördergut betätigbar.

Die erfindungsgemäße Betätigungseinrichtung weist für ihre Betätigung ein erstes Betätigungsglied und ein zweites Betätigungsglied auf. Die Betätigungseinrichtung, beispielsweise das erste Betätigungsglied und/oder das zweite Betätigungsglied, ist derart mit dem wenigstens einen Trennanschlag gekoppelt, d. h. in Wechselwirkung, dass bei betätigter Betätigungseinrichtung ein Bewegen des wenigstens einen Trennanschlags aus der Position oberhalb der Förderebene in die Position unterhalb der Förderebene blockiert ist und bei unbetätigter Betätigungseinrichtung ein Bewegen des wenigstens einen Trennanschlags aus der Position oberhalb der Förderebene in die Position unterhalb der Förderebene freigegeben ist. Insbesondere kann die Betätigungseinrichtung zusätzlich so mit dem wenigstens einen Trennanschlag gekoppelt sein, dass bei betätigter Betätigungsrichtung ein Bewegen des wenigstens einen Trennanschlags aus der Position unterhalb der Förderebene in die Position oberhalb der Förderebene möglich ist. Hierfür kann beispielsweise eine Falle vorgesehen sein, welche diese Bewegung zulässt und zusätzlich bewirkt, dass ein Bewegen des wenigstens einen Trennanschlags aus der Position oberhalb der Förderebene in die Position unterhalb der Förderebene blockiert ist, wenn die Betätigungseinrichtung betätigt ist.

Das erste Betätigungsglied ist so angeordnet und ausgebildet , dass es von in Förderrichtung bewegtem Fördergut, insbesondere aus dem Förderteil in die Entnahmestation einlaufendem Fördergut, von seiner unbetätigten Position, in der sich das erste Betätigungsglied zumindest teilweise oberhalb der Förderebene befindet, in seine betätigte Position bewegbar ist. Bei oder während der Betätigung kann das erste Betätigungsglied beispielsweise aus der Position oberhalb der Förderebene in eine Position unterhalb oder bündig mit der Förderebene, insbesondere in die betätigte Position bewegt werden. Die Position, in der das erste Betätigungsglied unterhalb der Förderebene ist, soll so verstanden werden, dass sie die Position miteinschließt, in der das erste Betätigungsglied bündig mit der Förderebene ist.

Das zweite Betätigungsglied ist so angeordnet und ausgebildet , dass es von entgegen der Förderrichtung bewegtem Fördergut, insbesondere von Fördergut, welches durch eine Bedienperson in die Entnahmestation zurückgestellt wird, von seiner unbetätigten Position, in der sich das zweite Betätigungsglied zumindest teilweise oberhalb der Förderebene befindet, in seine betätigte Position bewegbar ist. Bei oder während der Betätigung kann das zweite Betätigungsglied aus der Position oberhalb der Förderebene in eine Position unterhalb oder bündig mit der Förderebene, insbesondere die betätigte Position bewegt werden. Die Position, in der das zweite Betätigungsglied unterhalb der Förderebene ist, soll so verstanden werden, dass sie die Position miteinschließt, in der das zweite Betätigungsglied bündig mit der Förderebene ist.

Die Betätigung der Betätigungseinrichtung kann durch Betätigung eines aus erstem Betätigungsglied und zweitem Betätigungsglied bewirkt werden. D. h., dass für die Betätigung der Betätigungseinrichtung nicht notwendigerweise beide Betätigungsglieder betätigt werden müssen, sondern lediglich eines von beiden.

Dadurch, dass erfindungsgemäß die Betätigungseinrichtung ein zweites Betätigungsglied aufweist, kann sie von entgegen der Förderrichtung bewegtem Fördergut betätigt werden, sodass das Zurückstellen von Fördergut in die Entnahmestation unter Betätigung der Betätigungseinrichtung ermöglicht wird. Vorteilhaft kann dadurch ein Bewegen des wenigstens einen Trennanschlags aus der Position oberhalb der Förderebene in die Position unterhalb der Förderebene blockiert werden, wodurch derTrennanschlag durch Zurückstellen des Förderguts in die Fördereinrichtung aktiviert werden kann, d. h. seine Trennfunktion entfalten kann.

Optional können das erste Betätigungsglied und das zweite Betätigungsglied so miteinander gekoppelt sein, insbesondere miteinander wechselwirken, beispielsweise mechanisch oder gelenkig miteinander gekoppelt sein, dass die Bewegung des ersten Betätigungsglieds in seine betätigte Position die Bewegung des zweiten Betätigungsglieds in seine betätigte Position bewirkt und/oder dass die Bewegung des zweiten Betätigungsglieds in seine betätigte Position die Bewegung des ersten Betätigungsglieds in seine betätigte Position bewirkt. Die Betätigung von einem aus erstem Betätigungsglied und zweitem Betätigungsglied bewirkt somit die Betätigung des anderen aus erstem und zweitem Betätigungsglied. Egal welches aus erstem und zweitem Betätigungsglied betätigt wird, werden das erste und zweite Betätigungsglied in die betätigte Position bewegt, insbesondere geschwenkt. Dadurch wird vorteilhaft verhindert, dass das erste Betätigungsglied von sich entgegen der Förderrichtung bewegendem Fördergut entgegen der für seine Betätigung vorgesehene Richtung bewegt oder geschwenkt wird, wodurch eine Beschädigung des ersten Betätigungsglieds verhindert wird. Ebenso wird verhindert, dass das zweite Betätigungsglied von sich in Förderrichtung bewegendem Fördergut entgegen der für seine Betätigung vorgesehene Richtung bewegt oder geschwenkt wird. Dadurch wird eine Beschädigung des zweiten Betätigungsglieds von in Förderrichtung bewegtem Fördergut verhindert.

Beispielsweise kann das erste Betätigungsglied relativ zu der Förderebene oder einem Gestell der Trennvorrichtung schwenkbar sein. Alternativ oder zusätzlich kann das zweite Betätigungsglied relativ zu der Förderebene oder einem Gestell der Trennvorrichtung schwenkbar sein. Alternativ können das erste Betätigungsglied und/oder das zweite Betätigungsglied relativ zur Förderebene oder einem Gestell linear bewegbar sein.

In Ausführungen, in denen das erste Betätigungsglied und das zweite Betätigungsglied relativ zur Förderebene schwenkbar sind, sind das erste Betätigungsglied und das zweite Betätigungsglied bevorzugt in entgegengesetzte Richtungen schwenkbar. Alternativ oder zusätzlich können das erste Betätigungsglied und das zweite Betätigungsglied relativ zueinander schwenkbar sein.

Beispielsweise können das erste Betätigungsglied und das zweite Betätigungsglied über ein Gelenk miteinander verbunden sein, wodurch das erste Betätigungsglied und das zweite Betätigungsglied relativ zueinander bewegbar, insbesondere schwenkbar und/oder verschiebbar sind. Beispielsweise können das erste Betätigungsglied und das zweite Betätigungsglied zusammen das Gelenk bilden.

In Weiterbildungen kann das Gelenk ein Schwenkgelenk, insbesondere Schwenklager, sein, dessen Schwenkachse ortsfest in Bezug auf das erste Betätigungsglied und das zweite Betätigungsglied ist. Das Schwenkgelenk kann so ausgestaltet sein, dass es einen (1) rotatorischen Freiheitsgrad und keinen (0) translatorischen Freiheitsgrad zulässt. Das Schwenkgelenk ist ausgebildet, d. h. konfiguriert, dass das erste Betätigungsglied und das zweite Betätigungsglied relativ zueinander geschwenkt werden, wenn das erste Betätigungsglied und/oder das zweite Betätigungsglied zwischen der jeweiligen unbetätigten Position und der betätigten Position bewegt, insbesondere hin und her bewegt werden. Das Schwenkgelenk kann ein Schwenklager sein.

Beispielsweise kann eines aus erstem Betätigungsglied und zweitem Betätigungsglied über ein Schwenkgelenk, insbesondere Schwenklager, dessen Schwenkachse ortsfest in Bezug auf die Förderebene ist, mit einem Gestell der Trennvorrichtung verbunden sein, wobei das andere aus erstem Betätigungsglied und zweitem Betätigungsglied über ein Schwenk-Verschiebegelenk, insbesondere Schwenk-Verschiebelager, dessen Schwenkachse in Bezug auf die Förderebene verschiebbar ist, mit dem Gestell verbunden sein kann. Das Schwenkgelenk lässt vorzugsweise einen (1) rotatorischen Freiheitsgrad und keinen (0) translatorischen Freiheitsgrad zu. Das Schwenk-Verschiebegelenk lässt vorzugsweise einen (1) rotatorischen Freiheitsgrad und einen (1) oder mindestens einen translatorischen Freiheitsgrad zu. Die Schwenkachse des Schwenkgelenks, mit dem das Betätigungsglied mit dem Gestell verbunden ist, kann ortsfest in Bezug auf das Betätigungsglied und das Gestell sein. Die Schwenkachse des Schwenk-Verschiebegelenks, mit dem das Betätigungsglied mit dem Gestell verbunden ist, kann ortsfest in Bezug auf das Betätigungsglied, aber verschiebbar in Bezug auf das Gestell sein. In Ausführungsformen in denen eines aus erstem und zweitem Betätigungsglied über ein Schwenkgelenk mit dem Gestell verbunden ist und in denen das erste und zweite Betätigungsglied mit einem Schwenkgelenk verbunden sind, bewirkt das Schwenk-Verschiebegelenk, mit denen das verbleibende Betätigungsglied mit dem Gestell verbunden ist, einen Längenausgleich, der für die Bewegung des ersten und zweiten Betätigungsglieds aus der unbetätigten Position in die betätigte Position erforderlich ist. Beispielsweise kann dieser Längenausgleich für eine Bewegung eines Übertragungsglieds, über welches die Betätigungseinrichtung mit dem Trennanschlag gekoppelt sein kann, verwendet werden, wenn das Betätigungsglied betätigt wird. Insbesondere kann das Übertragungsglied an demjenigen Betätigungsglied befestigt oder damit gekoppelt sein, welches mit dem Schwenk-Verschiebegelenk mit dem Gestell verbunden ist.

In einer alternativen Ausführungsform kann das Gelenk, über welches das erste Betätigungsglied und das zweite Betätigungsglied miteinander verbunden sind, ein Schwenk-Verschiebegelenk (ein (1) rotatorischer Freiheitsgrad und ein (1) oder mindestens ein translatorischer Freiheitsgrad) sein. Das Schwenk-Verschiebegelenk kann dazu ausgebildet sein, dass das erste Betätigungsglied und das zweite Betätigungsglied relativ zueinander geschwenkt (ein rotatorischer Freiheitsgrad) und verschoben (ein translatorischer Freiheitsgrad) werden, wenn das erste Betätigungsglied und das zweite Betätigungsglied zwischen der jeweiligen unbetätigten Position und betätigten Position bewegt, insbesondere geschwenkt werden.

Beispielsweise kann eines aus erstem und zweitem Betätigungsglied über ein Schwenkgelenk (ein rotatorischer Freiheitsgrad), dessen Schwenkachse ortsfest in Bezug auf die Förderebene oder das Gestell ist, mit dem Gestell der Trennvorrichtung verbunden sein. Das andere aus erstem und zweitem Betätigungsglied kann über ein (weiteres) Schwenkgelenk, dessen Schwenkachse ortsfest in Bezug auf die Förderebene oder das Gestell und insbesondere parallel versetzt zu der Schwenkachse des anderen Betätigungsglieds ist, mit dem Gestell verbunden sein.

In einer solchen Ausführungsform bewirkt das Schwenk-Verschiebegelenk, über das das erste Betätigungsglied und das zweite Betätigungsglied miteinander verbunden sind, den Längenausgleich bei der Betätigung des Betätigungsglieds. Das Schwenkgelenk kann auch hier ein Drehlager oder Schwenklager sein. Die Schwenkachse des Schwenkgelenks, mit dem das erste Betätigungsglied mit dem Gestell verbunden ist, kann ortsfest in Bezug auf das erste Betätigungsglied und das Gestell sein. Die Schwenkachse des Schwenkgelenks, mit dem das zweite Betätigungsglied mit dem Gestell verbunden ist, kann ortsfest in Bezug auf das erste Betätigungsglied und das Gestell sein.

Die Schwenkachse des Schwenk-Verschiebegelenks, über welches das erste und zweite Betätigungsglied miteinander verbunden sind, kann ortsfest auf entweder das erste Betätigungsglied oder das zweite Betätigungsglied sein, während die Schwenkachse in Bezug auf das andere aus erstem und zweiten Betätigungsglied translatorisch verschiebbar sein kann, wenn die Betätigungseinrichtung oder eines der Betätigungsglieder betätigt wird.

Beispielsweise kann das erste Betätigungsglied auf dem zweiten Betätigungsglied, insbesondere an einer Gelenkstruktur, beispielsweise einem Zapfen oder einem auf dem Zapfen drehbar angeordneten Ring, des zweiten Betätigungsglieds aufliegen oder umgekehrt, d. h., dass das zweite Betätigungsglied auf dem ersten Betätigungsglied, insbesondere an einer Gelenkstruktur, beispielsweise einem Zapfen oder einem auf dem Zapfen drehbar angeordneten Ring, des ersten Betätigungsglieds aufliegen kann. Dadurch kann beispielsweise bewirkt werden, dass das Betätigungsglied das Betätigungsglied, auf dem es aufliegt, mitnimmt, wenn es betätigt wird. Wird das Betätigungsglied betätigt, auf dem das andere der beiden Betätigungsglieder aufliegt, wird das aufliegende Betätigungsglied durch seine auf sie wirkende Schwerkraft aus der unbetätigten Position in die betätigte Position bewegt, insbesondere verschwenkt. Beispielsweise kann das Übertragungsglied an dem Betätigungsglied befestigt oder damit gekoppelt sein, auf dem das andere der beiden Befestigungsglieder aufliegt. Die Schwerkraft des aufliegenden Befestigungsglieds kann nämlich in manchen Fällen - je nach Dimensionierung des Befestigungsglieds - nicht ausreichen, um das Übertragungsglied allein aufgrund der Schwerkraft des aufliegenden Betätigungsglieds zu bewegen. Daher ist es vorteilhaft, das Übertragungsglied an dem Betätigungsglied zu befestigen, auf dem das andere der beiden Betätigungsglieder aufliegt. Wird das Betätigungsglied betätigt, auf dem das andere Betätigungsglied aufliegt, kann die von dem Fördergut ausgeübte Kraft zum Bewegen des Übertragungsglieds ausgenutzt werden, während das andere der beiden Betätigungsglieder allein durch seine Schwerkraft in die betätigte Position bewegt wird. Wenn das Fördergut das aufliegende Betätigungsglied betätigt, nimmt es das andere der beiden Betätigungsglieder mit dem das Übertragungsglied gekoppelt ist, mit, wodurch das Übertragungsglied bewegt wird.

Alternativ zu einem Betätigungsglied, welches auf dem anderen Betätigungsglied durch Schwerkraft aufliegt, können das erste Betätigungsglied und das zweite Betätigungsglied aneinander zwangsgeführt sein, beispielsweise mittels eines Zapfens oder eines Führungsglieds an einem der beiden Betätigungsglieder, welcher oder welches in eine Nut oder Führungsbahn des anderen der beiden Betätigungsglieder eingreift. Das Übertragungsglied kann dann an einem der beiden Betätigungsglieder befestigt oder damit gekoppelt sein.

In Weiterbildungen kann das erste Betätigungsglied einen ersten Rahmen und/oder das zweite Betätigungsglied einen zweiten Rahmen aufweisen. Der jeweilige Rahmen kann über das Schwenkgelenk oder das Schwenk-Verschiebegelenk mit dem Gestell verbunden sein. Die Schwenkachse des Gelenks, mit dem der erste Rahmen mit dem Gestell verbunden ist, kann ortsfest in Bezug auf den ersten Rahmen sein. Die Schwenkachse des Gelenks, mit dem der zweite Rahmen mit dem Gestell verbunden ist, kann ortsfest in Bezug auf den zweiten Rahmen sein.

Insbesondere können an dem ersten Rahmen eine oder mehrere Rollen drehbar befestigt sein und/oder an dem zweiten Rahmen eine oder mehrere Rollen drehbar befestigt sein. Die mindestens eine Rolle ist relativ zu dem Rahmen, an dem sie befestigt ist, um ihre jeweilige Drehachse drehbar. Die eine oder mehreren Rollen sind so angeordnet, dass sie an dem Fördergut abrollen können oder abrollen, wenn das erste Betätigungsglied und/oder das zweite Betätigungsglied in seiner jeweiligen betätigten Position ist oder in seine jeweilige betätigte Position bewegt wird. Insbesondere kann die mindestens eine Rolle des ersten Rahmens und/oder die mindestens eine Rolle des zweiten Rahmens die Förderebene tangieren.

Alternativ oder zusätzlich kann das erste Betätigungsglied eine erste Gleitfläche aufweisen und/oder das zweite Betätigungsglied eine zweite Gleitfläche aufweisen. Die jeweilige Gleitfläche ist so angeordnet, dass das Fördergut daran abgleiten kann, wenn das erste Betätigungsglied und/oder das zweite Betätigungsglied in seiner jeweiligen betätigten Position ist oder in seine jeweilige betätigte Position bewegt wird. Beispielsweise kann die erste Gleitfläche an dem ersten Rahmen gebildet oder befestigt sein und/oder die zweite Gleitfläche an dem zweiten Rahmen gebildet oder befestigt sein. Beispielsweise kann das erste Betätigungsglied entweder eine erste Gleitfläche oder mindestens eine Rolle oder eine erste Gleitfläche und mindestens eine Rolle aufweisen. Alternativ oder zusätzlich kann das zweite Betätigungsglied entweder eine zweite Gleitfläche oder mindestens eine Rolle oder eine zweite Gleitfläche und eine Rolle aufweisen.

Die Trennvorrichtung kann beispielsweise ein Übertragungsglied aufweisen, wobei die Betätigungseinrichtung, insbesondere das erste Betätigungsglied oder das zweite Betätigungsglied mittels des Übertragungsglieds derart mit dem wenigstens einen Trennanschlag gekoppelt ist, dass bei betätigter Betätigungseinrichtung ein Bewegen des Trennanschlags aus der Position oberhalb der Förderebene in die Position unterhalb der Förderebene blockiert ist und bei unbetätigter Betätigungseinrichtung ein Bewegen des Trennanschlags aus der Position oberhalb der Förderebene in eine Position unterhalb der Förderebene freigegeben ist. Das Übertragungsglied kann beispielsweise schwenkbar an einem aus ersten und zweiten Betätigungsglied befestigt sein, insbesondere um eine Schwenkachse, die beabstandet und/oder parallel zu der Schwenkachse des Schwenkgelenks oder Schwenk-Verschiebegelenks ist, mit dem das Betätigungsglied an dem Gestell befestigt ist. Wenn das Betätigungsglied mit einem Schwenk-Verschiebegelenk an dem Gestell befestigt ist, kann die Schwenkachse, um die das Übertragungsglied schwenkbar an dem Betätigungsglied befestigt ist, optional die Schwenkachse des Schwenk-Verschiebegelenks sein.

Durch Betätigen des Betätigungsglieds wird bewirkt, dass das Übertragungsglied insbesondere entlang oder parallel zu der Förderebene, relativ zu dem Gestell bewegt wird.

Wie bereits erwähnt, kann das Übertragungsglied, vorzugsweise schwenkbar an demjenigen aus ersten und zweiten Betätigungsglied befestigt sein, auf dem das andere aus erstem und zweitem Betätigungsglied aufliegt. Allgemein ist es vorteilhaft, dass das Übertragungsglied an einem aus ersten und zweiten Betätigungsglied befestigt ist, insbesondere schwenkbar befestigt ist.

Das wenigstens eine Betätigungsglied ist mittels des Übertragungsglieds mit einer Falle verbunden, wobei das Übertragungsglied und die Falle mittels Betätigen der Betätigungseinrichtung entlang der Förderebene verschiebbar sind. Insbesondere sind die Falle und/oder das Übertragungsglied mittels Betätigung des Betätigungsglieds, d. h. mittels der Bewegung des ersten und/oder zweiten Betätigungsglieds zwischen einer Freigabeposition und einer Blockierposition bewegbar, insbesondere hin und her bewegbar oder verschiebbar. Wenn die Betätigungseinrichtung unbetätigt ist, befinden sich das Übertragungsglied und/oder die Falle in der Freigabeposition. Wenn die Betätigungseinrichtung betätigt ist, befinden sich das Übertragungsglied und/oder die Falle in der Blockierposition. Die Falle blockiert die Bewegung des Trennanschlags aus der Position oberhalb der Förderebene in die Position unterhalb der Förderebene, wenn das Übertragungsglied und/oder die Falle in der Blockierposition sind. Die Falle gibt die Bewegung des Trennanschlags, insbesondere aus seiner Position unterhalb der Förderebene in die Position oberhalb der Förderebene frei, wenn das Übertragungsglied und/oder die Falle in der Freigabeposition sind.

In einer Weiterbildung kann das Übertragungsglied so mit der Betätigungseinrichtung gekoppelt sein, dass es zusammen mit der Falle entgegen der Förderrichtung bewegt wird, wenn die Betätigungseinrichtung aus der betätigten Position in die unbetätigte Position zurückgestellt oder bewegt wird, und in Förderrichtung bewegt werden, wenn die Betätigungseinrichtung betätigt wird.

Beispielsweise kann die Falle relativ zum Übertragungsglied bewegbar oder schwenkbar sein. Das Übertragungsglied kann beispielsweise eine Lagerstruktur aufweisen, an der die Falle gebildet oder befestigt ist. Die Falle kann insbesondere um eine relativ zu der Lagerstruktur oder dem Übertragungsglied ortsfeste Drehachse schwenkbar sein. Die Falle kann so konfiguriert sein, dass bei betätigtem Betätigungsglied oder wenn sich das Übertragungsglied oder die Lagerstruktur in der Blockierposition befindet, ein Bewegen des wenigstens einen Trennanschlags aus der Position unterhalb der Förderebene in die Position oberhalb der Förderebene möglich ist, insbesondere unter Auslenken, insbesondere linearer oder schwenkender Bewegung der Falle. Beispielsweise kann die Falle in Bezug auf das Übertragungsglied linear bewegbar oder schwenkbar sein, insbesondere um eine zur Lagerstruktur oder dem Übertragungsglied ortsfeste Drehachse. Ein Trennanschlagträger kann vorgesehen sein, der den Trennanschlag und den Blockieranschlag aufweist. Die Falle kann bei betätigtem Betätigungsglied ein Bewegen des wenigstens einen Trennanschlags aus der Position unterhalb der Förderebene in die Position oberhalb der Förderebene ermöglichen, indem die Falle durch den Trennanschlagträger oder den Blockieranschlag des Trennanschlagträgers relativ zu der Lagerstruktur oder dem Übertragungsglied bewegt oder geschwenkt wird. D. h., dass die Falle durch den Trennanschlagträger, insbesondere dessen Blockieranschlag, ausgelenkt wird, wenn der Trennanschlag aus der Position unterhalb der Förderebene in die Position oberhalb der Förderebene bewegt wird. Eine Bewegung des Trennanschlags aus der Position oberhalb der Förderebene in die Position unterhalb der Förderebene wird durch Anstoßen des Blockieranschlags an der Falle verhindert, solange das Übertragungsglied und die Lagerstruktur in der Blockierposition sind.

DerTrennanschlagträger kann um eine gestellfeste Schwenkachse schwenkbar sein und einen Masseschwerpunkt aufweisen, der von der Schwenkachse beabstandet ist, sodass der Trennanschlag aufgrund des Masseschwerpunkts des Trennanschlagträgers in seine Position oberhalb der Förderebene schwenkt. Alternativ oder zusätzlich kann eine Feder vorgesehen sein, welche bei der Bewegung des Trennanschlagträgers aus der Position oberhalb der Förderebene in die Position unterhalb der Förderebene gespannt wird, wobei der Trennanschlag bzw. Trennanschlagträger von dergespannten Federin seine Position oberhalb der Förderebene zurückgesetzt wird oder zurücksetzbar ist.

Die Trennvorrichtung kann wenigstens ein Rücksetzelement aufweisen, welches dazu ausgebildet oder konfiguriert ist, das erste Betätigungsglied und das zweite Betätigungsglied, oder allgemein die Betätigungseinrichtung aus der betätigten Position in die unbetätigte Position zurückzubewegen, wenn das Betätigungsglied unbetätigt ist, insbesondere wenn kein Fördergut auf die Betätigungseinrichtung, insbesondere das Betätigungsglied der Betätigungseinrichtung, einwirkt.

Das Rücksetzelement kann beispielsweise eine Feder sein, welche durch die Betätigung der Betätigungseinrichtung gespannt wird, wobei die dadurch gespannte Feder fähig ist, das erste Betätigungsglied und das zweite Betätigungsglied, oder allgemein die Betätigungseinrichtung aus der betätigten Position in die unbetätigte Position zurückzubewegen. Beispielsweise kann die Feder mit einem Ende an dem Gestell der Trennvorrichtung oder der Förderbahn und mit dem anderen Ende an dem Übertragungsglied oder der Lagerstruktur befestigt sein. Die Feder kann eine Zugfeder sein, welche beim Betätigen der Betätigungseinrichtung und der damit einhergehenden Verschiebung des Übertragungsglieds aufZug gespannt wird. Alternativ kann die Feder eine Druckfeder sein, welche durch die Betätigung des Betätigungsglieds auf Druck gespannt wird. Die in der Feder gespeicherte Energie kann die Betätigungseinrichtung aus der betätigten Position in die unbetätigte Position zurückbewegen oder zurücksetzen.

Die Erfindung wurde anhand mehrerer bevorzugter Beispiele und Ausführungen beschrieben. Im Folgenden wird eine Ausführungsform der Erfindung anhand von Figuren beschrieben. Die dabei offenbarten Merkmale bilden den Gegenstand der Erfindung und der Ansprüche einzeln und in jeglicher Merkmalskombination vorteilhaft weiter. Es zeigen:
- Figur 1: eine Skizze einer Betätigungseinrichtung einer Trennvorrichtung,
- Figur 2: eine Seitenansicht eines Übertragungsglieds mit einer Falle,
- Figur 3: eine Draufsicht des Übertragungsglieds mit der Falle,

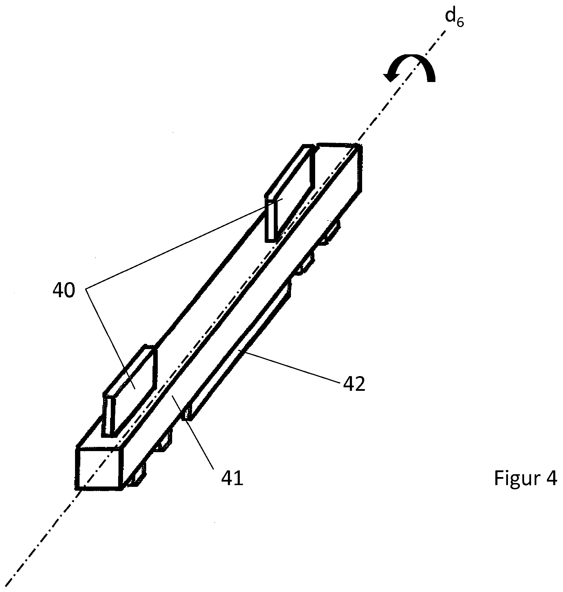

- Figur 4: einen Trennanschlag mit einem Trennanschlagträger,
- Figur 5: eine Skizze einer Trennvorrichtung in einer Seitenansicht, und
- Figur 6: eine Skizze des Übertragungsglieds mit einem Rücksetzelement.

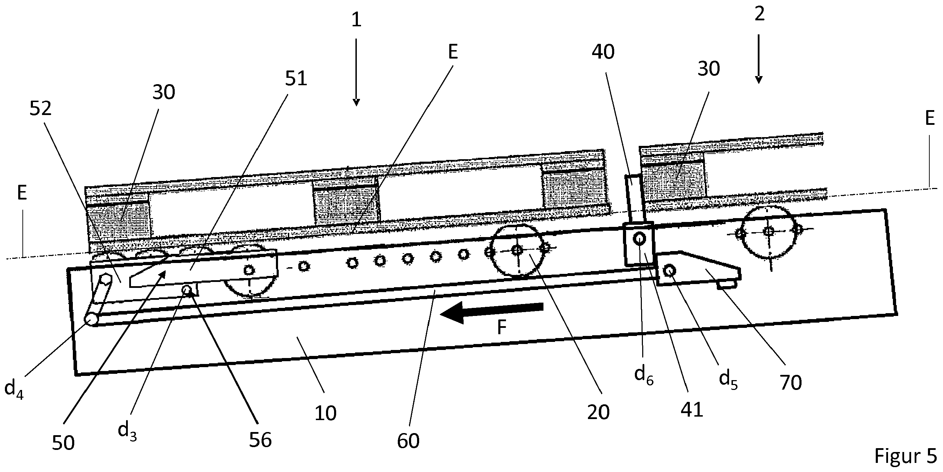

In der Figur 5 wird eine als Rollenförderbahn ausgebildete Schwerkraftförderbahn gezeigt. Die Schwerkraftförderbahn umfasst ein Gestell, an dem eine Vielzahl von Förderrollen 20 um ihre jeweilige Drehachse drehbar angeordnet sind. Das Gestell 10 weist zwei Seitenwände auf, zwischen denen die Förderrollen 20 angeordnet sind und an denen die Förderrollen 20 relativ dazu drehbar befestigt sind. Die Tangente an die Umfänge der Förderrollen 20 bildet eine Förderebene E, die in Bezug auf die Horizontale leicht, beispielsweise mit einem Winkel zwischen 2 und 10 %, geneigt ist, wodurch Fördergut 3, in dem in Figur 5 gezeigten Beispiel Paletten, durch die Schwerkraft in die Förderrichtung F entlang der Förderebene E gefördert werden. Die Unterseite des Förderguts 30 rollt auf den Umfängen der Förderrollen 20 ab. Die durch die Gewichtskraft und die Neigung der Förderebene E gegenüber der Horizontalen auf das Fördergut 30 wirkende Hangabtriebskraft F_{HA} ergibt sich wie folgt: F_{HA} = F_{G} · sin α, wobei α der Neigungswinkel der Förderebene E gegenüber der Horizontalen und F_{G} die Gewichtskraft sind. Die Reibung ist bei der Rechnung vernachlässigt.

Die Schwerkraftförderbahn weist eine Trennvorrichtung auf, welche eine Entnahmestation 1 von einem Förderteil 2 mittels mindestens eines Trennanschlags 40 trennt, sodass das in der Entnahmestation 1 befindliche Fördergut 30 staudruckfrei von dem im Förderteil 2 befindlichen Fördergut 30 entnommen werden kann. In dem gezeigten Beispiel sind an einem Trennanschlagträger 41 zwei Trennanschläge 40 gebildet. Alternativ kann ein einziger Trennanschlag 40, insbesondere abschnittsweise oder durchgehend an dem Trennanschlagträger 40 angebracht oder gebildet sein. Weiter alternativ können mehr als zwei Trennanschläge 40 an dem Trennanschlagträger 41 angebracht oder gebildet sein. Das dem Fördergut 30 in der Entnahmestation 1 nächstfolgende Fördergut 30 im Förderteil 2 liegt an dem Trennanschlag 40 an, wodurch der von dem Fördergut 30 im Förderteil 2 verursachte Staudruck von dem Anschlag 40 in das Gestell 10 geleitet wird. Der Trennanschlag 40 befindet sich in einer Lücke zwischen dem in der Entnahmestation 1 befindlichen Fördergut 30 und dem nächstfolgenden, sich im Förderteil 2 befindlichen Fördergut 30.

Der Trennanschlag 40 ist um eine Schwenkachse de, die ortsfest in Bezug auf das Gestell 10 angeordnet ist, zwischen einer Position, in der sich der Trennanschlag 40 oberhalb der Förderebene E befindet, und einer Position, in der sich der Trennanschlag 40 unterhalb der Förderebene E befindet, bewegbar bzw. schwenkbar. Der Trennanschlag 40 kann von einer Falle 70, die zwischen einer Blockierposition und einer Freigabeposition hin und her bewegbar ist, blockiert werden, von der Position oberhalb der Förderebene E in die Position unterhalb der Förderebene E um die Schwenkachse 6 geschwenkt zu werden, wenn sich die Falle 70 in der Blockierposition befindet. Wenn die Falle 70 aus der Blockierposition entgegen der Förderrichtung F und entlang der Förderebene E in die Freigabeposition verschoben wird, gibt sie den Trennanschlag 40 für eine Schwenkbewegung aus der Position oberhalb der Förderebene E in die Position unterhalb der Förderebene E frei. Durch die auf den Trennanschlag 40 ausgeübte Hangabtriebskraft des Förderguts 30 wird der Trennanschlag 40 in die Position unterhalb der Förderebene E geschwenkt, wodurch das Fördergut 30 aus dem Förderteil 2 in die Entnahmestation 1 gefördert wird.

Der mindestens eine Trennanschlag 40 wird von einem Trennanschlagträger 41 gebildet, der dem Trennanschlag 40 entsprechend um die Schwenkachse d₆ schwenkbar ist. Der Trennanschlagträger 41 bildet einen Blockieranschlag 42, der an einer Anschlagfläche 71 der Falle 70 anliegt oder anliegen kann, wenn sich die Falle 70 in der Blockierposition befindet. Wenn die Falle 70 in die Freigabeposition bewegt ist, kann der Blockieranschlag 72 nicht mehr an der Anschlagfläche 71 der Falle 70 anliegen, wodurch der Trennanschlag 40 aus der Position oberhalb der Förderebene E in die Position unterhalb der Förderebene E schwenkbar ist.

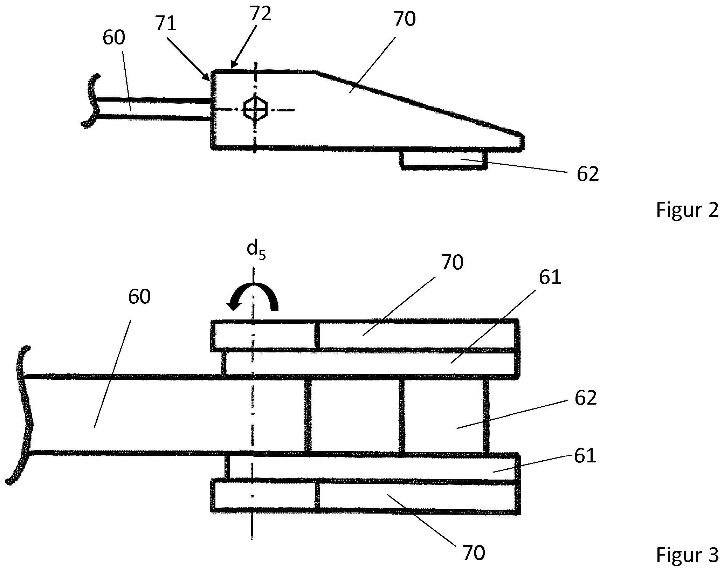

Für den Fall, dass der Trennanschlag 40 in der Position unterhalb der Förderebene E ist und die Falle 70 in ihre Blockierposition verschoben wurde, kann der Trennanschlagträger 41 bzw. der Trennanschlag 40 um die Schwenkachse d₆ in die Position oberhalb der Förderebene E geschwenkt werden, wobei der Trennanschlagträger 41 oder sein Blockieranschlag 42 während dieser Schwenkbewegung an einer Fläche 72 (Figur 2) der Falle 70 anstößt und an der Fläche 72 entlanggleitet, wodurch die Falle 70 um eine Schwenkachse d₅ geschwenkt oder ausgelenkt wird. Dabei wird die Falle 70 von einem Auflager der Lagerstruktur 61 abgehoben. Wenn der Trennanschlagträger 41 an der Falle 70 vorbei geschwenkt ist, nimmt die Falle 70 wieder ihre ursprüngliche Position auf dem Auflager 62 ein, beispielsweise aufgrund der Schwerkraft oder aufgrund der Rückstellkraft einer auf sie wirkenden Feder. In dieser Position kann der Blockieranschlag 42 wieder an der Anschlagfläche 71 der Falle 70 anschlagen, wodurch ein Verschwenken des Trennanschlags 40 in die Position unterhalb der Förderebene E blockiert wird.

Die Schwenkachse d₅ ist ortsfest in Bezug auf eine Lagerstruktur 61, welche die Falle 70 schwenkbar lagert. Die Lagerstruktur 61 wird von einem Übertragungsglied 60 gebildet oder ist mit dem Übertragungsglied 60 verbunden. Das Übertragungsglied 60, die Lagerstruktur 61 und die Falle 70 können entsprechend der Bewegung der Falle 70 zwischen der Blockierposition und der Freigabeposition entlang der Förderebene E hin und her bewegt werden.

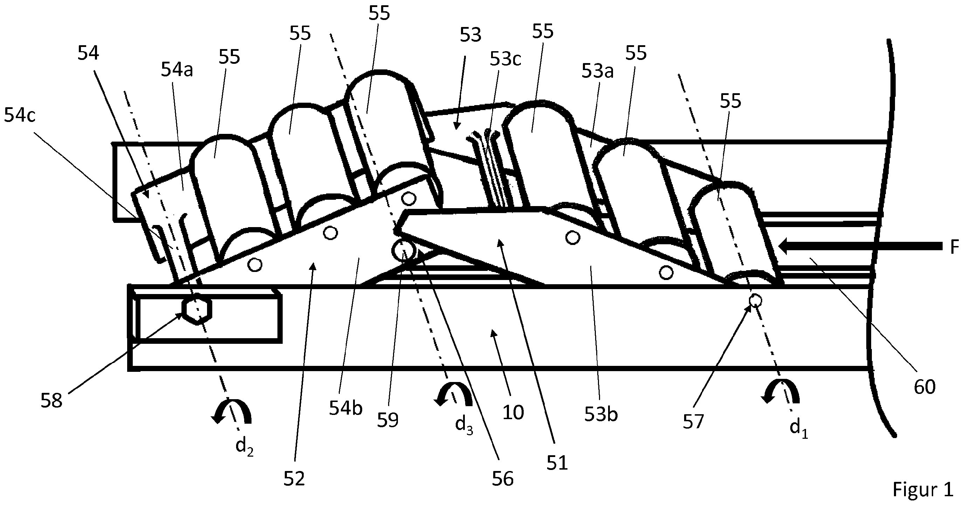

Die Trennvorrichtung weist eine Betätigungseinrichtung 50 auf, die derart mit dem wenigstens einen Trennanschlag 40 gekoppelt ist, dass bei betätigter Betätigungseinrichtung 50 (Figur 5) ein Bewegen des wenigstens einen Trennanschlags 40 aus der Position oberhalb der Förderebene E in die Position unterhalb der Förderebene E blockiert ist und bei unbetätigter Betätigungseinrichtung 50, d. h., wenn die in Figur 5 gezeigte Palette 30 aus der Entnahmestation 1 entfernt wurde, ein Bewegen des wenigstens einen Trennanschlags 40 aus der Position oberhalb der Förderebene E in die Position unterhalb der Förderebene E freigegeben ist. Die Betätigungseinrichtung 50 ist über das Übertragungsglied 60 mit der Falle 70 verbunden. Wenn die Betätigungseinrichtung 50 betätigt ist, sind das Übertragungsglied 60 und die Falle 70 in Förderrichtung F in die Blockierposition verschoben (Figur 5). Wenn die Betätigungseinrichtung 50 unbetätigt ist (Figur 1), sind das Übertragungsglied 60 und die Falle 70 gegen die Förderrichtung F in die Freigabeposition verschoben.

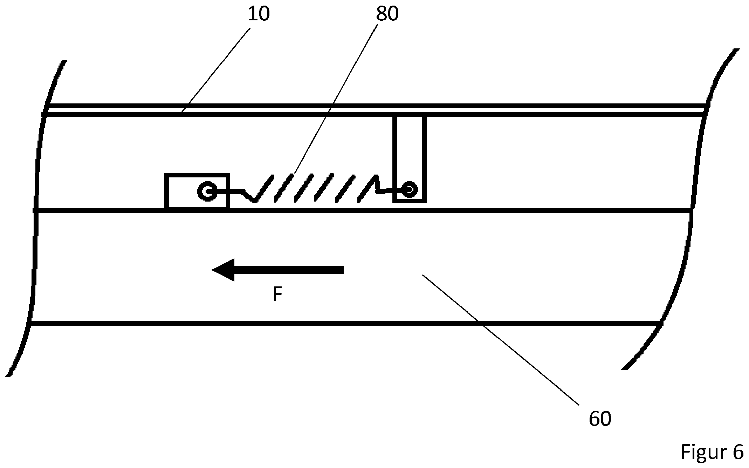

In der Figur 6 wird ein Rücksetzelement 80 in der Gestalt einer hier als Zugfeder wirkenden Feder gezeigt. Die Feder ist mit einem Ende mit dem Gestell und mit dem anderen Ende mit dem Übertragungsglied 60 verbunden. Bei der Verschiebung des Übertragungsglieds 60 in die Blockierposition bzw. wenn die Betätigungseinrichtung 50 betätigt wird, wird die Feder gespannt. Wenn die Betätigungseinrichtung 50 nicht mehr betätigt wird, insbesondere wenn das Fördergut 30 aus der Entnahmestation 1 entfernt wird, bewegt die Federkraft das Übertragungsglied 60 und die Falle 70 in die Freigabeposition und setzt die Betätigungseinrichtung 50 in die unbetätigte Position zurück.

Eine bevorzugte Betätigungseinrichtung 50, wie sie in Figur 1 dargestellt ist, weist ein erstes Betätigungsglied 51 und ein zweites Betätigungsglied 52 auf. Das erste Betätigungsglied 51 ist so angeordnet und ausgebildet, dass es von sich in Förderrichtung F bewegendem Fördergut 30 von seiner unbetätigten Position (Figur 1) in der sich das Betätigungsglied 51 zumindest teilweise oberhalb der Förderebene E befindet, in seine betätigte Position bewegbar ist. Üblicherweise wird das erste Betätigungsglied 51 von Fördergut 30 betätigt, welches sich aus dem Förderteil 2 in die Entnahmestation 1 bewegt.

Das zweite Betätigungsglied 52 wird von entgegen der Förderrichtung F bewegtem Fördergut 30 von seiner unbetätigten Position in, in der sich das zweite Betätigungsglied 52 zumindest teilweise oberhalb der Förderebene E befindet, in seine betätigte Position bewegt. Üblicherweise wird das zweite Betätigungsglied 52 von Fördergut bewegt, welches entgegen der Förderrichtung F in die Entnahmestation 1 zurückgestellt wird, nachdem es beispielsweise irrtümlicherweise oder fehlerhaft aus der Entnahmestation 1 entnommen wurde.

Das erste Betätigungsglied 51 und das zweite Betätigungsglied 52 sind so miteinander gekoppelt, dass die Bewegung des ersten Betätigungsglieds 51 in seine betätigte Position die Bewegung des zweiten Betätigungsglieds 52 in seine betätigte Position bewirkt und dass die Bewegung des zweiten Betätigungsglieds 52 in seine betätigte Position, mit Hilfe der Schwerkraft, die Bewegung des ersten Betätigungsglieds 51 in seine betätigte Position bewirkt. Somit wird sichergestellt, dass immer beide Betätigungsglieder 51, 52 in ihre betätigte Position bewegt werden, egal welches der beiden Betätigungsglieder 51, 52 betätigt wird. Das erste Betätigungsglied 51 ist um eine Schwenkachse d₁, insbesondere relativ zu dem Gestell 10 derTrennvorrichtung, schwenkbar, die ortsfest in Bezug auf die Förderebene E bzw. das Gestell 10, und das erste Betätigungsglied 51 ist. Das zweite Betätigungsglied 52 ist um eine von der Schwenkachse d₁ des ersten Betätigungsglieds 51 parallel versetzte Schwenkachse dz, insbesondere relativ zu dem Gestell 10, schwenkbar, die ortsfest in Bezug auf das zweite Betätigungsglied 52 und die Förderebene E bzw. das Gestell 10 der Trennvorrichtung ist. Das erste Betätigungsglied 51 und das zweite Betätigungsglied 52 sind über ein Gelenk 56, welches als Schwenk-Verschiebegelenk ausgestaltet ist, miteinander verbunden. Dadurch sind das erste Betätigungsglied 51 und das zweite Betätigungsglied 52 relativ zueinander schwenkbar und verschiebbar.

Das erste Betätigungsglied 51 liegt auf dem zweiten Betätigungsglied 52, insbesondere auf einer Lagerstruktur 59 des zweiten Betätigungsglieds, auf. Durch Betätigen des ersten Betätigungsglieds 51 schwenkt das erste Betätigungsglied 51 aus der unbetätigten Position in die betätigte Position, wobei es das zweite Betätigungsglied 52 währenddessen mitnimmt, wodurch das zweite Betätigungsglied 52 in die betätigte Position geschwenkt wird. Wird das zweite Betätigungsglied 52 betätigt, schwenkt es nach unten, wodurch das erste Betätigungsglied 51 aufgrund seiner Schwerkraft ebenfalls in die betätigte Position geschwenkt wird.

Das Übertragungsglied 60 ist um eine Schwenkachse d₄ schwenkbar mit dem zweiten Betätigungsglied 52 verbunden, wobei die Schwenkachse d₄ von der Schwenkachse d₂ beabstandet, insbesondere parallel versetzt, ist. Hierdurch wird eine Bewegung des Übertragungsglieds 60 entlang der Förderebene E bewirkt, wenn das zweite Betätigungsglied 52 um die Schwenkachse d₂ geschwenkt wird.

Dadurch wird bewirkt, dass bei Betätigung der Betätigungseinrichtung 50 die Falle 70 in die Blockierposition bewegt wird und beim Zurücksetzen des Übertragungsglieds 60 oder der Betätigungseinrichtung 50 die Falle 70 in die Freigabeposition bewegt wird.

Das erste Betätigungsglied 51 weist einen ersten Rahmen 53 auf, der zwei Seitenwände 53a, 53b umfasst, zwischen denen mehrere Rollen 55 um ihre jeweilige Drehachse drehbar angeordnet sind. Die Seitenwände 53a, 53b des Rahmens 53 können vorteilhaft mittels eines oder mehreren Verbindungsstegen 53c verbunden sein, um den Rahmen 53 die notwendige Stabilität zu geben.

Das zweite Betätigungsglied 52 weist einen 54 Rahmen auf, der zwei Seitenwände 54a, 54b umfasst, zwischen denen mehrere Rollen 55 um ihre jeweilige Drehachse drehbar angeordnet sind. Die Seitenwände 54a, 54b des Rahmens 54 können vorteilhaft mittels eines oder mehreren Verbindungsstegen 54c verbunden sein, um den Rahmen 54 die notwendige Stabilität zu geben.

Das zweite Betätigungsglied 52 oder dessen Rahmen 54 weist eine Gelenkstruktur 59 in der Gestalt eines Lagerzapfens auf, auf dem das erste Betätigungsglied 51, insbesondere der Rahmen 53 oder eine Seitenwand 53a; 53b des Rahmens 53 aufliegt. Das erste Betätigungsglied 51 oder dessen Rahmen 53 kann direkt am Umfang des z. B. in Bezug auf den Rahmen 54 des zweiten Betätigungsglieds 52 feststehenden Lagerzapfen anliegen, wodurch beim Verschwenken des ersten und zweiten Betätigungsglieds 51, 52 beispielsweise Gleitreibung zwischen dem ersten Betätigungsglied 51 und dem Lagerzapfen, insbesondere dessen Umfangsfläche, stattfindet, oder an einem Ring aufliegen, der drehbar an dem Lagerzapfen gelagert ist, wie z. B. dem Außenring eines auf dem Lagerzapfen angeordneten Wälzlagers, wodurch zwischen dem ersten Betätigungsglied 51 und der Gelenkstruktur 59, insbesondere dem Ring, beispielsweise Rollreibung stattfindet. In beiden Fällen wird ein Schwenk-Verschiebegelenk zwischen dem ersten Betätigungsglied 51 und dem zweiten Betätigungsglied 52 gebildet. Insbesondere können die erste Drehachse d₁ und die zweite Drehachse d₂ sowie die dritte Drehachse d₃ parallel zueinander und insbesondere parallel zu der Förderebene E angeordnet sein. Vorteilhaft sind die Schwenkachsen d₄, d₅ und d₆ parallel zueinander und/oder parallel zu der Förderebene E.

Der zweite Rahmen 54 oder die Wände 54a, 54b des zweiten Rahmens 54 können beispielsweise zwischen den Wänden 53a, 53b des ersten Rahmens 53 angeordnet sein. Von jeder der Wände 54a, 54b des zweiten Rahmens 54 kann eine Gelenkstruktur 59 abragen, insbesondere von der Seite einer jeden Wand 54a, 54b, die von der anderen Wand 54a, 54b wegweist. Beispielsweise kann der zweite Rahmen 54 eine erste Wand 54a und eine zweite Wand 54b aufweisen, wobei die Gelenkstruktur 59 der ersten Wand 54a auf der Seite der ersten Wand 54a angeordnet ist, die von der zweiten Wand 54b wegweist und wobei die Gelenkstruktur 59 der zweiten Wand 54b auf der Seite der zweiten Wand 54b angeordnet sein kann, welche von der ersten Wand 54a wegweist. Hierdurch wird vorteilhaft ermöglicht, dass die erste Wand 53a des ersten Rahmens 53 an der Gelenkstruktur 59 der ersten Wand 54a des zweiten Rahmens 54 und die zweite Wand 53b des ersten Rahmens 53 an der Glenkstruktur 59 der zweiten Wand 54b des zweiten Rahmens 54 aufliegt.

Der Rahmen 10 der Trennvorrichtung kann eine erste Wand 10a und eine zweite Wand 10b aufweisen, wobei zwischen der ersten Wand 54a des zweiten Rahmens 54 und der ersten Wand 10a des Gestells 10 ein Spalt gebildet ist, der so breit ist, dass die Gelenkstruktur 59 und die erste Wand 53a des ersten Rahmens 53 darin Platz finden können. Dementsprechend kann auch ein zwischen der zweiten Wand 54b des zweiten Rahmens 54 und der zweiten Wand 10b ein Spalt ausgebildet sein.

Eine Tangentialebene an die Außenumfänge der Rollen 55 des ersten Betätigungsglieds 51 bildet eine erste Betätigungsebene. Eine Tangentialebene an die Außenumfänge der Rollen 55 des zweiten Betätigungsglieds 52 bildet eine zweite Betätigungsebene. Wenn die Betätigungseinrichtung 50 unbetätigt ist, kann der Winkel zwischen der ersten Betätigungsebene und dem Teil der Förderebene E, der bezogen auf die Förderrichtung F stromabwärtig der Schwenkachse d₁ liegt, kleiner als 90°, insbesondere kleiner als 45°, jedoch größer als 0° sein. Alternativ oder zusätzlich kann, wenn die Betätigungseinrichtung 50 unbetätigt ist, der Winkel zwischen der zweiten Betätigungsebene und dem Teil der Förderebene E, der bezogen auf die Förderrichtung F stromaufwärtig der Schwenkachse d₂ liegt, kleiner als 90°, insbesondere kleiner als 45°, jedoch größer als 0° sein. Wenn die Betätigungseinrichtung 50 betätigt ist, können die erste und zweite Betätigungsebene beispielsweise parallel zu der Förderebene E sein oder mit der Förderebene E zusammenfallen.

**Bezugszeichenliste**

| | | | |
|---|---|---|---|
| 1 | Entnahmestation | 55 | Rolle |
| 2 | Förderteil | 56 | Gelenk |
| 10 | Gestell der Trennvorrichtung | 57 | erstes Schwenkgelenk |
| 10a | erste Wand | 58 | zweites Schwenkgelenk |
| 10b | zweite Wand | 59 | Gelenkstruktur |
| 20 | Führungen/Förderrollen | 60 | Übertragungsglied |
| 30 | Fördergut | 61 | Lagerstruktur |
| 40 | Trennanschlag | 62 | Auflager |
| 41 | Trennanschlagträger | 70 | Falle |
| 42 | Blockieranschlag | 71 | Anschlagfläche |
| 50 | Betätigungseirichtung | 72 | Fläche / Getriebefläche |
| 51 | erstes Betätigungsglied | 80 | Rücksetzelement/Feder |
| 52 | zweites Betätigungsglied | d₁ | erste Schwenkachse |
| 53 | erster Rahmen | d₂ | zweite Schwenkachse |
| 53a | erste Wand | d₃ | dritte Schwenkachse |
| 53b | zweite Wand | d₄ | vierte Schwenkachse |
| 53c | Verbindungssteg | d₅ | fünfte Schwenkachse |
| 54 | zweiter Rahmen | d₆ | sechste Schwenkachse |
| 54a | erste Wand | E | Förderebene |
| 54b | zweite Wand | F | Förderrichtung |
| 54c | Verbindungssteg | | |

## Patentansprüche

1. Trennvorrichtung für eine Schwerkraftförderbahn, umfassend:
a) eine Förderebene (E), welche durch wenigstens zwei Führungen (20), insbesondere Gleitführungen oder Förderrollen, zur Förderung eines Fördergutes (30) vorgegeben ist und entlang der das Fördergut (30) in eine Förderrichtung (F) bewegbar ist,
b) wenigstens einen Trennanschlag (40), welcher zwischen einer Position oberhalb der Förderebene (E) und einer Position unterhalb oder bündig mit der Förderebene (E) bewegbar ist,
c) eine Betätigungseinrichtung (50), die für ihre Betätigung ein erstes Betätigungsglied (51) und ein zweites Betätigungsglied (52) aufweist und die derart mit dem wenigstens einen Trennanschlag (40) gekoppelt ist, dass bei betätigter Betätigungseinrichtung (50) ein Bewegen des wenigstens einen Trennanschlags (40) aus der Position oberhalb der Förderebene (E) in die Position unterhalb oder bündig mit der Förderebene (E) blockiert ist und bei unbetätigter Betätigungseinrichtung (50) ein Bewegen des wenigstens einen Trennanschlags (40) aus der Position oberhalb der Förderebene (E) in die Position unterhalb oder bündig mit der Förderebene (E) freigegeben ist,
d) wobei das erste Betätigungsglied (51) von in Förderrichtung (F) bewegtem Fördergut (30) von seiner unbetätigten Position, in der sich das erste Betätigungsglied (51) zumindest teilweise oberhalb der Förderebene (E) befindet, in seine betätigte Position bewegbar ist,
**dadurch gekennzeichnet, dass**
e) das zweite Betätigungsglied (52) von entgegen der Förderrichtung (F) bewegtem Fördergut (30) von seiner unbetätigten Position, in der sich das zweite Betätigungsglied (52) zumindest teilweise oberhalb der Förderebene (E) befindet, in seine betätigte Position bewegbar ist,
f) wobei optional das erste Betätigungsglied (51) und das zweite Betätigungsglied (52) so miteinander gekoppelt sind, dass die Bewegung des ersten Betätigungsglieds (51) in seine betätigte Position die Bewegung des zweiten Betätigungsglieds (52) in seine betätigte Position bewirkt und/oder dass die Bewegung des zweiten Betätigungsglieds (52) in seine betätigte Position die Bewegung des ersten Betätigungsglieds (51) in seine betätigte Position bewirkt.

2. Trennvorrichtung, nach Anspruch 1, **dadurch gekennzeichnet, dass** die Förderebene (E) in Bezug auf die Horizontale geneigt ist, wodurch das Fördergut (30) aufgrund der auf das Fördergut (30) wirkenden Schwerkraft entlang der Förderebene (E) in Förderrichtung (F) bewegbar ist.

3. Trennvorrichtung nach einem der vorhergehenden Ansprüche, **dadurch gekennzeichnet, dass** das erste Betätigungsglied (51) relativ zur Förderebene (E) schwenkbar ist und/oder das zweite Betätigungsglied (52) relativ zur Förderebene (E) schwenkbar ist.

4. Trennvorrichtung nach einem der vorhergehenden Ansprüche, **dadurch gekennzeichnet, dass** das erste Betätigungsglied (51) und das zweite Betätigungsglied (52) relativ zueinander schwenkbar sind.

5. Trennvorrichtung nach einem der vorhergehenden Ansprüche, **dadurch gekennzeichnet, dass** das erste Betätigungsglied (51) und das zweite Betätigungsglied (52) über ein Gelenk (56) miteinander verbunden sind.

6. Trennvorrichtung, nach dem vorhergehenden Anspruch, **dadurch gekennzeichnet, dass** das Gelenk (56) ein Schwenkgelenk ist, dessen Schwenkachse (d₃) ortsfest in Bezug auf das erste Betätigungsglied (51) und das zweite Betätigungsglied (52) ist und das dazu konfiguriert ist, dass das erste Betätigungsglied (51) und das zweite Betätigungsglied (52) relativ zueinander geschwenkt werden, wenn das erste Betätigungsglied (51) und das zweite Betätigungsglied (52) zwischen der jeweiligen unbetätigten Position und betätigten Position bewegt werden oder die Betätigungseinrichtung (50) betätigt wird, wobei bevorzugt ist, dass eines aus erstem Betätigungsglied (51) und zweitem Betätigungsglied (52) über ein Schwenkgelenk (57; 58), dessen Schwenkachse (d₁; d₂) ortsfest in Bezug auf die Förderebene (E) ist, mit einem Gestell (10) der Trennvorrichtung verbunden ist, und das andere aus erstem Betätigungsglied (51) und zweitem Betätigungsglied (52) über ein Schwenk-Verschiebegelenk, dessen Schwenkachse in Bezug auf die Förderebene (E) verschiebbar ist, mit dem Gestell (10) verbunden ist.

7. Trennvorrichtung, nach Anspruch 5, **dadurch gekennzeichnet, dass** das Gelenk (56) ein Schwenk-Verschiebegelenk ist, das dazu ausgebildet ist, dass das erste Betätigungsglied (51) und das zweite Betätigungsglied (52) relativ zueinander geschwenkt und verschoben werden, wenn das erste Betätigungsglied (51) und das zweite Betätigungsglied (52) zwischen der jeweiligen unbetätigten Position und betätigten Position bewegt werden oder die Betätigungseinrichtung (50) betätigt wird, wobei bevorzugt ist, dass die Schwenkachse (d₃) des Schwenk-Verschiebegelenks ortsfest in Bezug auf entweder das erste Betätigungsglied (51) oder das zweite Betätigungsglied (52) ist.

8. Trennvorrichtung nach dem vorhergehenden Anspruch, **dadurch gekennzeichnet, dass** das erste Betätigungsglied (51) über ein Schwenkgelenk (57), dessen Schwenkachse (d₁) ortsfest in Bezug auf die Förderebene (E) ist, mit einem Gestell (10) der Trennvorrichtung verbunden ist, und das zweite Betätigungsglied (52) über ein Schwenkgelenk (58), dessen Schwenkachse (d₂) ortsfest in Bezug auf die Förderebene (E) ist, mit dem Gestell (10) verbunden ist.

9. Trennvorrichtung nach einem der zwei vorhergehenden Ansprüche, **dadurch gekennzeichnet, dass** das erste Betätigungsglied (51) auf dem zweiten Betätigungsglied (52), insbesondere an einer Gelenkstruktur (59) des zweiten Betätigungsglieds (52) aufliegt, oder dass das zweite Betätigungsglied (52) auf dem ersten Betätigungsglied (51), insbesondere an einer Gelenkstruktur (59) des ersten Betätigungsglieds (51) aufliegt.

10. Trennvorrichtung nach einem der vorhergehenden Ansprüche, **dadurch gekennzeichnet, dass** das erste Betätigungsglied (51) einen ersten Rahmen (53) und/oder das zweite Betätigungsglied (52) einen zweiten Rahmen (54) aufweist, wobei an dem ersten Rahmen (53) eine oder mehrere Rollen (55) drehbar befestigt sind und/oder an dem zweiten Rahmen (54) eine oder mehrere Rollen (55) drehbar befestigt sind, wobei die eine oder mehreren Rollen (55) so angeordnet sind, dass sie an dem Fördergut (30) abrollen können, wenn das erste Betätigungsglied (51) und/oder zweite Betätigungsglied (52) in seiner jeweiligen betätigten Position ist oder in seine jeweilige betätigte Position bewegt wird.

11. Trennvorrichtung nach einem der vorhergehenden Ansprüche, **dadurch gekennzeichnet, dass** das erste Betätigungsglied (51) eine erste Gleitfläche aufweist und/oder das zweite Betätigungsglied (52) eine zweite Gleitfläche aufweist, wobei die Gleitfläche so angeordnet ist, dass das Fördergut (30) daran abgleiten kann, wenn das erste Betätigungsglied (51) und/oder zweite Betätigungsglied (52) in seiner jeweiligen betätigten Position ist oder in seine jeweilige betätigte Position bewegt wird, wobei bevorzugt ist, dass die Betätigungseinrichtung (50) mittels eines Übertragungsglieds (60) derart mit dem wenigstens einen Trennanschlag (40) gekoppelt ist, dass bei betätigter Betätigungseinrichtung (50) ein Bewegen des Trennanschlags (40) aus der Position oberhalb der Förderebene (E) in die Position unterhalb oder bündig mit der Förderebene (E) blockiert ist und bei unbetätigter Betätigungseinrichtung (50) ein Bewegen des Trennanschlags (40) aus der Position oberhalb der Förderebene (E) in die Position unterhalb oder bündig mit der Förderebene (E) freigegeben ist, wobei das Übertragungsglied (60) schwenkbar an einem aus ersten und zweiten Betätigungsglied (51; 52) befestigt ist.

12. Trennvorrichtung nach den Ansprüchen 9 und 11, **dadurch gekennzeichnet, dass** das Übertragungsglied (60) schwenkbar an demjenigen aus ersten und zweiten Betätigungsglied (51; 52) befestigt ist, auf dem das andere aus erstem und zweitem Betätigungsglied (51; 52) aufliegt.

13. Trennvorrichtung nach dem vorhergehenden Anspruch, **dadurch gekennzeichnet, dass** die Betätigungseinrichtung (50) mittels des Übertragungsglieds (60) mit einer Falle (70) verbunden ist, wobei das Übertragungsglied (60) und die Falle (70) mittels Betätigen der Betätigungseinrichtung (50) entlang der Förderebene (E) verschiebbar sind, wobei bevorzugt ist, dass das Übertragungsglied (60) mittels der Bewegung des ersten und/oder zweiten Betätigungsglieds (51; 52) zwischen einer Freigabeposition und einer Blockierposition bewegbar ist, wobei das Übertragungsglied (60) in der Freigabeposition ist, wenn die Betätigungseinrichtung (50) unbetätigt ist, und das Übertragungsglied (60) in der Blockierposition ist, wenn die Betätigungseinrichtung (50) betätigt ist, und wobei die Falle (70) die Bewegung des Trennanschlags (40) in die Position unterhalb oder bündig mit der Förderebene (E) blockiert, wenn das Übertragungsglied (60) in der Blockierposition ist, und die Falle (70) die Bewegung des Trennanschlags (40) freigibt, wenn das Übertragungsglied (60) in der Freigabeposition ist.

14. Trennvorrichtung nach dem vorhergehenden Anspruch, **dadurch gekennzeichnet, dass** die Falle (70) relativ zum Übertragungsglied (60), insbesondere zu einer Lagerstruktur (61) des Übertragungsglieds (60), bewegbar, insbesondere um eine zu der Lagerstruktur (61) oder dem Übertragungsglied (60) ortsfeste Drehachse (d₅) schwenkbar ist, wobei die Falle (70) bei betätigter Betätigungseinrichtung (50) ein Bewegen des wenigstens einen Trennanschlags (40) aus der Position unterhalb oder bündig mit der Förderebene (E) in die Position oberhalb der Förderebene (E) ermöglicht, insbesondere indem die Falle (70) durch einen Blockieranschlag (42) eines Trennanschlagträgers (41), der den Trennanschlag (40) und den Blockieranschlag (42) aufweist, relativ zu der Lagerstruktur (61) oder dem Übertragungsglied (60) bewegt oder geschwenkt wird, wobei bevorzugt ist, dass der Trennanschlagträger (41) um eine gestellfeste Schwenkachse (d₆) schwenkbar ist und einen Masseschwerpunkt aufweist, der von der Schwenkachse (d₆) beabstandet ist, so dass der Trennanschlag (40) aufgrund des Masseschwerpunkts des Trennanschlagträgers (41) in seine Position oberhalb der Förderebene (E) schwenkt.

15. Trennvorrichtung nach einem der vorhergehenden Ansprüche, **gekennzeichnet durch** wenigstens ein Rücksetzelement (80), welches dazu konfiguriert ist, das erste Betätigungsglied (51) und das zweite Betätigungsglied (52) aus der betätigten Position in die unbetätigte Position zurückzubewegen, wobei bevorzugt ist, dass das Rücksetzelement (80) eine Feder ist, welche durch die Betätigung der Betätigungseinrichtung (50) gespannt wird, wobei die dadurch gespannte Feder fähig ist, das erste Betätigungsglied (51) und das zweite Betätigungsglied (52) aus der betätigten Position in die unbetätigte Position zurückzubewegen.

## Claims

1. A separating device for a gravity conveyor, comprising:
a) a conveying plane (E) which is defined by at least two guides (20), in particular sliding guides or conveying rollers, for conveying an item (30) to be conveyed and along which the item (30) to be conveyed can be moved in a conveying direction (F);
b) at least one separating stop (40) which can be moved between a position above the conveying plane (E) and a position below or flush with the conveying plane (E);
c) an actuating means (50) which, in order to actuate it, comprises a first actuating member (51) and a second actuating member (52) and which is coupled to the at least one separating stop (40) in such a way that, when the actuating means (50) is actuated, a movement of the at least one separating stop (40) from the position above the conveying plane (E) to the position below or flush with the conveying plane (E) is blocked, and when the actuating means (50) is unactuated, a movement of the at least one separating stop (40) from the position above the conveying plane (E) to the position below or flush with the conveying plane (E) is enabled,
d) wherein the first actuating member (51) can be moved, by conveyed items (30) being moved in the conveying direction (F), from its unactuated position in which it is situated at least partially above the conveying plane (E), to its actuated position,
**characterised in that**
e) the second actuating member (52) can be moved, by conveyed items (30) being moved counter to the conveying direction (F), from its unactuated position in which it is situated at least partially above the conveying plane (E), to its actuated position,
f) wherein the first actuating member (51) and second actuating member (52) are optionally coupled to each other, such that moving the first actuating member (51) into its actuated position causes the second actuating member (52) to be moved into its actuated position and/or such that moving the second actuating member (52) into its actuated position causes the first actuating member (51) to be moved into its actuated position.

2. The separating device according to claim 1, **characterised in that** the conveying plane (E) is inclined in relation to the horizontal, whereby the items (30) to be conveyed can be moved in the conveying direction (F) along the conveying plane (E) by the force of gravity acting on the conveyed items (30).

3. The separating device according to any one of the preceding claims, **characterised in that** the first actuating member (51) can be pivoted relative to the conveying plane (E) and/or the second actuating member (52) can be pivoted relative to the conveying plane (E).

4. The separating device according to any one of the preceding claims, **characterised in that** the first actuating member (51) and the second actuating member (52) can be pivoted relative to each other.

5. The separating device according to any one of the preceding claims, **characterised in that** the first actuating member (51) and the second actuating member (52) are connected to each other via a joint (56).

6. The separating device according to the preceding claim, **characterised in that** the joint (56) is a pivot joint, the pivot axis (d₃) of which is spatially fixed in relation to the first actuating member (51) and the second actuating member (52), and which is configured such that the first actuating member (51) and the second actuating member (52) are pivoted relative to each other when the first actuating member (51) and the second actuating member (52) are moved between the respective unactuated position and actuated position or the actuating means (50) is actuated, wherein preferably, one of the first actuating member (51) and the second actuating member (52) is connected to a framework (10) of the separating device via a pivot joint (57; 58), the pivot axis (d₁; d₂) of which is spatially fixed in relation to the conveying plane (E), and the other of the first actuating member (51) and the second actuating member (52) is connected to the framework (10) via a plunging pivoting joint, the pivot axis of which can be shifted in relation to the conveying plane (E).

7. The separating device according to claim 5, **characterised in that** the joint (56) is a plunging pivoting joint which is embodied such that the first actuating member (51) and the second actuating member (52) are pivoted and shifted relative to each other when the first actuating member (51) and the second actuating member (52) are moved between the respective unactuated position and actuated position or the actuating means (50) is actuated, wherein preferably, the pivot axis (d₃) of the plunging pivoting joint is spatially fixed in relation to either the first actuating member (51) or the second actuating member (52).

8. The separating device according to the preceding claim, **characterised in that** the first actuating member (51) is connected to a framework (10) of the separating device via a pivot joint (57), the pivot axis (d₁) of which is spatially fixed in relation to the conveying plane (E), and the second actuating member (52) is connected to the framework (10) via a pivot joint (58), the pivot axis (d₂) of which is spatially fixed in relation to the conveying plane (E).

9. The separating device according to any one of the preceding two claims, **characterised in that** the first actuating member (51) rests on the second actuating member (52), in particular on a joint structure (59) of the second actuating member (52), or **in that** the second actuating member (52) rests on the first actuating member (51), in particular on a joint structure (59) of the first actuating member (51).

10. The separating device according to any one of the preceding claims, **characterised in that** the first actuating member (51) comprises a first frame (53) and/or the second actuating member (52) comprises a second frame (54), wherein one or more rollers (55) are rotatably fastened to the first frame (53) and/or one or more rollers (55) are rotatably fastened to the second frame (54), wherein the one or more rollers (55) are arranged such that they can roll off on the items (30) to be conveyed when the first actuating member (51) and/or the second actuating member (52) is in its respective actuated position or is moved into its respective actuated position.

11. The separating device according to any one of the preceding claims, **characterised in that** the first actuating member (51) comprises a first sliding surface and/or the second actuating member (52) comprises a second sliding surface, wherein the sliding surface is arranged such that the items (30) to be conveyed can slide off on it when the first actuating member (51) and/or the second actuating member (52) is in its respective actuated position or is moved into its respective actuated position, wherein preferably, the actuating means (50) is coupled to the at least one separating stop (40) by means of a transmission member (60) in such a way that when the actuating means (50) is actuated, a movement of the separating stop (40) from the position above the conveying plane (E) to the position below or flush with the conveying plane (E) is blocked, and when the actuating means (50) is unactuated, a movement of the separating stop (40) from the position above the conveying plane (E) to the position below or flush with the conveying plane (E) is enabled, wherein the transmission member (60) is fastened, such that it can be pivoted, to one of the first and second actuating members (51; 52).

12. The separating device according to claims 9 and 11, **characterised in that** the transmission member (60) is pivotably fastened to said one of the first and second actuating members (51; 52) on which the other of the first and second actuating members (51; 52) rests.

13. The separating device according to the preceding claim, **characterised in that** the actuating means (50) is connected to a latch (70) by means of the transmission member (60), wherein the transmission member (60) and the latch (70) can be shifted along the conveying plane (E) by means of actuating the actuating means (50), wherein preferably, the transmission member (60) can be moved by means of moving the first and/or second actuating member (51; 52) between a release position and a blocking position, wherein when the actuating means (50) is unactuated, the transmission member (60) is in the release position, and when the actuating means (50) is actuated, the transmission member (60) is in the blocking position, and wherein the latch (70) blocks the movement of the separating stop (40) into the position below or flush with the conveying plane (E) when the transmission member (60) is in the blocking position, and the latch (70) enables the movement of the separating stop (40) when the transmission member (60) is in the release position.

14. The separating device according to the preceding claim, **characterised in that** the latch (70) can be moved relative to the transmission member (60), in particular a bearing structure (61) of the transmission member (60), and can in particular be pivoted about an axis of rotation (d₅) which is spatially fixed with respect to the bearing structure (61) or the transmission member (60), wherein when the actuating means (50) is actuated, the latch (70) enables a movement of the at least one separating stop (40) from the position below or flush with the conveying plane (E) to the position above the conveying plane (E), in particular by being moved or pivoted relative to the bearing structure (61) or transmission member (60) by a blocking stop (42) of a separating stop support (41) which comprises the separating stop (40) and the blocking stop (42), wherein preferably, the separating stop support (41) can be pivoted about a pivot axis (d₆) which is fixed with respect to the framework and exhibits a centre of mass which is spaced from the pivot axis (d₆), such that the separating stop (40) pivots into its position above the conveying plane (E) due to the centre of mass of the separating stop support (41).

15. The separating device according to any one of the preceding claims, **characterised by** at least one resetting element (80) which is configured to move the first actuating member (51) and the second actuating member (52) from the actuated position back to the unactuated position, wherein preferably, the resetting element (80) is a spring which is tensioned by actuating the actuating means (50), wherein the spring which is tensioned in this way is capable of moving the first actuating member (51) and the second actuating member (52) from the actuated position back to the unactuated position.

## Revendications

1. Dispositif de séparation destiné à une bande transporteuse à force de pesanteur, comprenant :
a) un plan de transport (E), qui est prédéfini par au moins deux guidages (20), en particulier des glissières ou des rouleaux de transport, pour transporter un article à transporter (30) et le long duquel l'article à transporter (30) peut être déplacé en direction de transport (F) ;
b) au moins une butée de séparation (40) qui peut être déplacée entre une position au-dessus du plan de transport (E) et une position au-dessous du plan de transport (E) ou au même niveau que le plan de transport (E) ;
c) un système d'actionnement (50) qui comporte un premier élément d'actionnement (51) et un second élément d'actionnement (52) destinés à son actionnement et qui est couplé à ladite au moins une butée de séparation (40) de sorte que, lorsque le système d'actionnement (50) est actionné, un déplacement de ladite au moins une butée de séparation (40) depuis la position au-dessus du plan de transport (E) vers la position au-dessous du plan de transport (E) ou au même niveau que le plan de transport (E) est bloqué, et de sorte que, lorsque le système d'actionnement (50) n'est pas actionné, un déplacement de ladite au moins une butée de séparation (40) depuis la position au-dessus du plan de transport (E) vers la position au-dessous du plan de transport (E) ou au même niveau que le plan de transport (E) est libéré,
d) le premier élément d'actionnement (51) pouvant être déplacé, par l'intermédiaire d'articles à transporter (30) déplacés en direction de transport (F), depuis sa position non actionnée, dans laquelle le premier élément d'actionnement (51) est situé au moins partiellement au-dessus du plan de transport (E), vers sa position actionnée,
**caractérisé en ce que**
e) le second élément d'actionnement (52) peut être déplacé, par l'intermédiaire d'articles à transporter (30) déplacés en direction opposée à la direction de transport (F), depuis sa position non actionnée, dans laquelle le second élément d'actionnement (52) est situé au moins partiellement au-dessus du plan de transport (E), vers sa position actionnée,
f) le premier élément d'actionnement (51) et le second élément d'actionnement (52) étant éventuellement couplés l'un à l'autre de sorte que le déplacement du premier élément d'actionnement (51) dans sa position actionnée provoque le déplacement du second élément d'actionnement (52) dans sa position actionnée et / ou de sorte que le déplacement du second élément d'actionnement (52) dans sa position actionnée provoque le déplacement du premier élément d'actionnement (51) dans sa position actionnée.

2. Dispositif de séparation selon la revendication 1, **caractérisé en ce que** le plan de transport (E) est incliné par rapport à l'horizontale, et les articles à transporter (30) peuvent ainsi être déplacés le long du plan de transport (E) en direction de transport (F) sous l'effet de la pesanteur agissant sur les articles à transporter (30).

3. Dispositif de séparation selon l'une quelconque des revendications précédentes, **caractérisé en ce que** le premier élément d'actionnement (51) peut être pivoté par rapport au plan de transport (E) et / ou le second élément d'actionnement (52) peut être pivoté par rapport au plan de transport (E).

4. Dispositif de séparation selon l'une quelconque des revendications précédentes, **caractérisé en ce que** le premier élément d'actionnement (51) et le second élément d'actionnement (52) peuvent être pivotés l'un par rapport à l'autre.

5. Dispositif de séparation selon l'une quelconque des revendications précédentes, **caractérisé en ce que** le premier élément d'actionnement (51) et le second élément d'actionnement (52) sont reliés l'un à l'autre par l'intermédiaire d'une articulation (56).

6. Dispositif de séparation selon la revendication précédente, **caractérisé en ce que** l'articulation (56) est une articulation de pivotement dont l'axe de pivotement (d₃) est fixe par rapport au premier élément d'actionnement (51) et au second élément d'actionnement (52), et qui est configurée de sorte que le premier élément d'actionnement (51) et le second élément d'actionnement (52) sont pivotés l'un par rapport à l'autre lorsque le premier élément d'actionnement (51) et le second élément d'actionnement (52) sont déplacés respectivement entre la position non actionnée et la position actionnée ou lorsque le système d'actionnement (50) est actionné, l'un parmi le premier élément d'actionnement (51) et le second élément d'actionnement (52) étant de préférence relié à un châssis (10) du dispositif de séparation par l'intermédiaire d'une articulation de pivotement (57 ; 58) dont l'axe de pivotement (d₁ ; d₂) est fixe par rapport au plan de transport (E), l'autre parmi le premier élément d'actionnement (51) et le second élément d'actionnement (52) étant de préférence relié au châssis (10) par l'intermédiaire d'une articulation de translation et de pivotement dont l'axe de pivotement est déplaçable par rapport au plan de transport (E).

7. Dispositif de séparation selon la revendication 5, **caractérisé en ce que** l'articulation (56) est une articulation de translation et de pivotement qui est conçue de sorte que le premier élément d'actionnement (51) et le second élément d'actionnement (52) sont pivotés et déplacés l'un par rapport à l'autre lorsque le premier élément d'actionnement (51) et le second élément d'actionnement (52) sont déplacés respectivement entre la position non actionnée et la position actionnée ou lorsque le système d'actionnement (50) est actionné, l'axe de pivotement (d₃) de l'articulation de translation et de pivotement étant de préférence fixe par rapport au premier élément d'actionnement (51) ou au second élément d'actionnement (52).

8. Dispositif de séparation selon la revendication précédente, **caractérisé en ce que** le premier élément d'actionnement (51) est relié à un châssis (10) du dispositif de séparation par l'intermédiaire d'une articulation de pivotement (57) dont l'axe de pivotement (d₁) est fixe par rapport au plan de transport (E), et le second élément d'actionnement (52) est relié au châssis (10) par l'intermédiaire d'une articulation de pivotement (58) dont l'axe de pivotement (d₂) est fixe par rapport au plan de transport (E).

9. Dispositif de séparation selon l'une quelconque des deux revendications précédentes, **caractérisé en ce que** le premier élément d'actionnement (51) repose sur le second élément d'actionnement (52), en particulier sur une structure d'articulation (59) du second élément d'actionnement (52), ou **en ce que** le second élément d'actionnement (52) repose sur le premier élément d'actionnement (51), en particulier sur une structure d'articulation (59) du premier élément d'actionnement (51).

10. Dispositif de séparation selon l'une quelconque des revendications précédentes, **caractérisé en ce que** le premier élément d'actionnement (51) comporte un premier cadre (53) et/ou le second élément d'actionnement (52) comporte un second cadre (54), un ou plusieurs rouleaux (55) étant fixés de manière rotative sur le premier cadre (53) et / ou un ou plusieurs rouleaux (55) étant fixés de manière rotative sur le second cadre (54), lesdits un ou plusieurs rouleaux (55) étant disposés de sorte à pouvoir rouler sur l'article à transporter (30) lorsque le premier élément d'actionnement (51) et / ou le second élément d'actionnement (52) est situé respectivement en position actionnée ou est déplacé respectivement dans la position actionnée.

11. Dispositif de séparation selon l'une quelconque des revendications précédentes, **caractérisé en ce que** le premier élément d'actionnement (51) présente une première surface de glissement et / ou le second élément d'actionnement (52) présente une seconde surface de glissement, la surface de glissement étant disposée de sorte que l'article à transporter (30) peut glisser sur ladite surface de glissement lorsque le premier élément d'actionnement (51) et / ou le second élément d'actionnement (52) est situé respectivement en position actionnée ou est déplacé respectivement dans la position actionnée, le système d'actionnement (50) étant de préférence couplé à ladite au moins une butée de séparation (40) au moyen d'un élément de transmission (60) de sorte que, lorsque le système d'actionnement (50) est actionné, un déplacement de la butée de séparation (40) depuis la position au-dessus du plan de transport (E) vers la position au-dessous du plan de transport (E) ou au même niveau que le plan de transport (E) est bloqué, et de sorte que, lorsque le système d'actionnement (50) n'est pas actionné, un déplacement de la butée de séparation (40) depuis la position au-dessus du plan de transport (E) vers la position au-dessous du plan de transport (E) ou au même niveau que le plan de transport (E) est libéré, l'élément de transmission (60) étant fixé de manière pivotante sur le premier élément d'actionnement (51) ou sur le second élément d'actionnement (52).

12. Dispositif de séparation selon les revendications 9 et 11, **caractérisé en ce que** l'élément de transmission (60) est fixé de manière pivotante sur le premier élément d'actionnement (51), sur lequel repose le second élément d'actionnement (52), ou sur le second élément d'actionnement (52), sur lequel repose le premier élément d'actionnement (51).

13. Dispositif de séparation selon la revendication précédente, **caractérisé en ce que** le système d'actionnement (50) est relié à un verrou (70) au moyen de l'élément de transmission (60), l'élément de transmission (60) et le verrou (70) étant déplaçables le long du plan de transport (E) par l'actionnement du système d'actionnement (50), l'élément de transmission (60) pouvant de préférence être déplacé entre une position de libération et une position de blocage au moyen du déplacement du premier élément d'actionnement (51) et / ou du second élément d'actionnement (52), l'élément de transmission (60) étant en position de libération lorsque le système d'actionnement (50) n'est pas actionné, et l'élément de transmission (60) étant en position de blocage lorsque le système d'actionnement (50) est actionné, le verrou (70) bloquant le déplacement de la butée de séparation (40) dans la position au-dessous du plan de transport (E) ou au même niveau que le plan de transport (E) lorsque l'élément de transmission (60) est situé en position de blocage, le verrou (70) libérant le déplacement de la butée de séparation (40) lorsque l'élément de transmission (60) est situé en position de libération.

14. Dispositif de séparation selon la revendication précédente, **caractérisé en ce que** le verrou (70) peut être déplacé par rapport à l'élément de transmission (60), en particulier par rapport à une structure de palier (61) de l'élément de transmission (60), en particulier pivoté autour d'un axe de rotation (d₅) fixe par rapport à la structure de palier (61) ou à l'élément de transmission (60), le verrou (70) permettant, lorsque le système d'actionnement (50) est actionné, un déplacement de ladite au moins une butée de séparation (40) depuis la position au-dessous du plan de transport (E) ou au même niveau que le plan de transport (E) vers la position au-dessus du plan de transport (E), en particulier en déplaceant ou pivotant le verrou (70) par une butée de blocage (42) d'un support de butée de séparation (41), comportant la butée de séparation (40) et la butée de blocage (42), par rapport à la structure de palier (61) ou à l'élément de transmission (60), le support de butée de séparation (41) pouvant de préférence être pivoté autour d'un axe de pivotement (d₆) fixe par rapport au châssis et présentant un centre de masse qui est éloigné de l'axe de pivotement (d₆) de sorte que la butée de séparation (40) pivote dans sa position au-dessus du plan de transport (E) sous l'effet du centre de masse du support de butée de séparation (41).

15. Dispositif de séparation selon l'une quelconque des revendications précédentes, **caractérisé par** au moins un élément de réinitialisation (80) configuré pourfaire reculer le premier élément d'actionnement (51) et le second élément d'actionnement (52) depuis la position actionnée vers la position non actionnée, l'élément de réinitialisation (80) étant de préférence un ressort qui est tendu par l'actionnement du système d'actionnement (50), le ressort ainsi tendu pouvant faire reculer le premier élément d'actionnement (51) et le second élément d'actionnement (52) depuis la position actionnée vers la position non actionnée.
